# EUROPÄISCHE PATENTANMELDUNG

(11) **EP 4 681 797 A1**
(43) Veröffentlichungstag der Anmeldung: **21.01.2026**
(21) Anmeldenummer: 25173287.1
(22) Anmeldetag: 29.04.2025
(51) Int. Cl.: B01D 53/04, B01D 53/26

(54) **VERFAHREN ZUR STEUERUNG EINER ANLAGE ZUR ABTRENNUNG VON KOHLENSTOFFDIOXID AUS DER UMGEBUNGSLUFT SOWIE ANLAGE**

(30) Priorität: 03.05.2024 DE 102024112493
(71) Anmelder: VOLKSWAGEN AG, 38440 Wolfsburg (DE); Everllence SE, 86153 Augsburg (DE)
(72) Erfinder: Heimermann, Christian, 38442 Wolfsburg (DE); Rüggeberg, Marc, 38124 Braunschweig (DE); Wiegel, Marcel, 39649 Gardelegen / OT Sachau (DE); Kawelke, Peter, 38442 Wolfsburg (DE); Hofer, Martin, 38118 Braunschweig (DE); Behnke, Klaus, 69198 Schriesheim (DE); Weber, Stephan, 45699 Herten (DE)
(74) Vertreter: Gulde & Partner

(57) **Zusammenfassung**

Die Erfindung betrifft ein Verfahren zur Steuerung einer Anlage (10) zur Abtrennung von Kohlenstoffdioxid (48) aus der Umgebungsluft (74). Das Verfahren umfasst folgende Schritte
- Fördern (100) eines Luftstroms (68) der Umgebungsluft (74) in einen ersten Prozessraum (26), wobei der Luftstrom (68) in dem ersten Prozessraum (26) getrocknet wird,
- Weiterleiten (110) der getrockneten Umgebungsluft (74) aus dem ersten Prozessraum (26) in einen zweiten Prozessraum (27),
- Adsorbieren (200) von Kohlenstoffdioxid (48) aus dem getrockneten Luftstrom (68) mit einem Sorbentmaterial (22) in dem zweiten Prozessraum (27),
- Desorbieren (210, 220) des in dem Sorbentmaterial (22) adsorbierten Kohlenstoffdioxids (48), und
- Einlagern (230) des desorbierten Kohlenstoffdioxids (48) in einer Speichereinheit (16) oder Überführen des Kohlenstoffdioxids (48) in einen nachfolgenden Prozess.

Es ist vorgesehen, dass eine Anpassung der Prozessparameter der Anlage (10) für die Trocknung, die Adsorption und/oder die Desorption auf Basis eines Beladungsgrads des Trocknungsmittel (72) oder des Sorbentmaterials (22) erfolgt.

Die Erfindung betrifft ferner eine Anlage (10) zur Durchführung eines solchen Verfahrens.

## Beschreibung

Die Erfindung betrifft ein Verfahren zur Steuerung einer Anlage zur Abtrennung von Kohlenstoffdioxid aus der Umgebungsluft sowie eine Anlage zur Durchführung eines solchen Verfahrens gemäß dem Oberbegriff der unabhängigen Patentansprüche.

Aus dem Stand der Technik sind Anlagen und Verfahren zum Abscheiden von Kohlenstoffdioxid aus der Umgebungsluft bekannt. Eine solche Abscheidung kann nach dem sogenannten "Direct-Air-Capture-Verfahren" durchgeführt werden, wobei das Kohlenstoffdioxid unmittelbar aus der Umgebungsluft abgeschieden, eingespeichert oder einem weiteren Prozess zugeführt werden kann. Die Abtrennung von Kohlenstoffdioxid aus der Umgebungsluft kann durch unterschiedliche Sorbenten erfolgen. Typischerweise werde zur Abtrennung von Kohlenstoffdioxid Chemisorbenten und/oder Physisorbenten eingesetzt. Amin-basierte Chemisorbenten haben das Problem der Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Physisorbenten, wie beispielsweise Zeolithen, haben das Problem, dass die Affinität des Sorbentmaterials für Wasser(dampf) höher ist als für Kohlenstoffdioxid, wodurch die Umgebungsluft vor der Zufuhr zu einem Adsorptionsraum, in welchem das Zeolithmaterial angeordnet ist, zunächst getrocknet werden muss. Eine solche Trocknung der Luft ist ebenfalls aufwendig und teuer.

Um eine effiziente Abtrennung von Kohlenstoffdioxid aus der Umgebungsluft zu erreichen, werden Anlagen zur Abtrennung von Kohlenstoffdioxid bevorzugt mit erneuerbaren Energien, insbesondere mit Wasserkraft, Geothermie, Windkraft oder Solarenergie betrieben. Ein Betrieb mit Wasserkraft wäre vorteilhaft, da diese kontinuierlich und zuverlässig zur Verfügung gestellt werden kann. Jedoch ist das Potenzial für die Energiegewinnung von Wasserkraft auf entsprechende Flussläufe reduziert und wird schon heute in vielen Regionen nahezu vollständig ausgenutzt, sodass ein Ausweitung der Nutzung von Wasserkraft limitiert ist. Geothermie kann ebenfalls kontinuierlich genutzt werden, und ist daher an bestimmten Standorten eine Option. Solarenergie und Windkraft können im Wesentlichen ortsunabhängig verwendet werden, die Nutzung ist jedoch durch den Umlauf der Sonne und/oder die Wetterbedingungen am Standort beschränkt.

Nachteilig bei solchen Anlagen ist jedoch, dass die Adsorptions- und Desorptionsprozesse für Kohlenstoffdioxid sowie ein gegebenenfalls der Adsorption vorgeschalteter Trocknungsprozess der Umgebungsluft durch unterschiedliche Rahmenbedingungen, wie beispielsweise die Umgebungstemperatur, die Luftfeuchtigkeit, die Temperatur sowie den Kohlenstoffdioxidgehalt der Umgebungsluft beeinflusst werden.

Aus der US 2023 / 0 167 756 A1 ist ein System zur mobilen Abscheidung von Kohlenstoffdioxid bekannt. Das System umfasst ein Abscheidungsmodul, ein Regenerationsmodul und ein Speichermodul. Das System kann optional ein thermisches Kontrollmodul und/oder einen Entfeuchter enthalten. Die US 2023 / 0 167 756 A1 offenbart ferner ein Verfahren zur mobilen Kohlenstoffdioxidabscheidung mit einem solchen System.

Die US 2023 / 0 390 700 A1 beschreibt Systeme und Verfahren zur transportablen, massenproduzierbaren und stapelbaren Kohlenstoffdioxidabscheidung. Die Kohlenstoffdioxid-Abscheidungsmodule sind lokal in einem Cluster angeordnet und werden von modularen oder lokal fixierten Versorgungsmodulen bedient. Die Versorgungsmodule werden von zentralen Anlagenserviceeinrichtungen versorgt, welche für das Kohlenstoffdioxid-Abscheidungssystem bestimmt sein können oder alternativ mit anderen gemeinsam betriebenen Anlagen geteilt werden können. Die Kohlenstoffdioxid-Abscheidungsmodule bestehen aus einer Vielzahl von Sorptionsmittelreaktoren, die jeweils herausnehmbare Sorptionsmittelpatronen umfassen, die zu Wartungs- oder Aufrüstungszwecken leicht ausgetauscht werden können. Die Kohlenstoffdioxid-Sorptionsmittelreaktoren werden abwechselnd im Adsorptions- und Desorptionsmodus betrieben und innerhalb des Sorptionsmittelmoduls und des entsprechenden Clusters miteinander synchronisiert, um einen kontinuierlichen Betrieb zu erreichen.

Ferner offenbart die US 2023 / 0 008 877 A1 eine Adsorptionsvorrichtung mit Adsorptionsfasern, die entlang eines zentralen Rohrs verlegt oder um dieses gewickelt sind. In einem speziellen Beispiel sind die Adsorptionsfasern poröse feste Amin-Adsorptionsfasern.

Ein Modul zur Reinigung einer Rohflüssigkeit umfasst ein oder mehrere Adsorptionsmittel, die in einem Behälter in Reihe oder parallel installiert werden können. Das Modul kann für den Axial- oder Querstrombetrieb konfiguriert werden und kann zur Reinigung eines Gases eingesetzt werden, das eine Verunreinigung, wie zum Beispiel ein saures Gas, enthält. In einigen Ausführungsformen ist das Modul mit einem oder mehreren Heizelementen ausgestattet, die zur Freisetzung adsorbierter Verunreinigungen freizusetzen, um die adsorbierenden Fasern zu regenerieren.

Der Erfindung liegt nun die Aufgabe zugrunde, die Effizienz einer Anlage zur Abtrennung von Kohlenstoffdioxid aus der Umgebungsluft zu erhöhen und die aus dem Stand der Technik bekannten Nachteile zumindest teilweise zu überwinden.

Die Aufgabe wird durch ein Verfahren zur Steuerung einer Anlage zur Abtrennung von Kohlenstoffdioxid aus der Umgebungsluft, gelöst. Das Verfahren umfasst folgende Schritte
- Fördern eines Luftstroms der Umgebungsluft in einen ersten Prozessraum, wobei der Luftstrom in dem ersten Prozessraum getrocknet wird,
- Weiterleiten der getrockneten Umgebungsluft aus dem ersten Prozessraum in einen zweiten Prozessraum
- Adsorbieren von Kohlenstoffdioxid aus dem getrockneten Luftstrom mit einem Sorbentmaterial in dem zweiten Prozessraum,
- Desorbieren des in dem Sorbentmaterial adsorbierten Kohlenstoffdioxids, und
- Einlagern des desorbierten Kohlenstoffdioxids in einer Speichereinheit oder Überführen des desorbierten Kohlenstoffdioxids in einen nachfolgenden Prozess.

Erfindungsgemäß ist vorgesehen, dass eine Anpassung der Prozessparameter der Anlage für die Trocknung, die Adsorption und/oder die Desorption auf Basis eines Beladungsgrads des Trocknungsmittel oder des Sorbentmaterials erfolgt. Mit anderen Worten werden Prozessparameter der Anlage für die Trocknung, die Adsorption und/oder die Desorption in Abhängigkeit des Beladungsgrads des Trocknungsmittel oder des Sorbentmaterials vorgegeben.

Das erfindungsgemäße Verfahren erlaubt es, die Effizienz eines Prozesses zur Abtrennung von Kohlenstoffdioxid aus der Umgebungsluft durch eine verbesserte Ausgestaltung der Teilprozesse "Trocknung", "Adsorption" und "Desorption" zu verbessern. Insbesondere ist es mit einem erfindungsgemäßen Verfahren möglich, die Abbruchbedingungen der Teilprozesse so zu definieren, dass die Beladungskapazität des Trocknungsmittels beziehungsweise des Sorbentmaterials maximal ausgenutzt wird.

Durch die in den abhängigen Ansprüchen aufgeführten zusätzlichen Merkmale sind vorteilhafte Weiterentwicklungen und Verbesserungen des im unabhängigen Anspruch aufgeführten Verfahren zur Steuerung einer Anlage zur Abtrennung von Kohlenstoffdioxid aus der Umgebungsluft möglich.

In bevorzugter Ausgestaltung der Erfindung ist vorgesehen, dass eine Wasseraufnahme des Trocknungsmittels auf Basis einer ermittelten Restfeuchte der Luft stromabwärts der Trocknungseinheit abgeschätzt wird. Dadurch kann eine besonders effiziente Trocknung der Umgebungsluft erreicht werden. Insbesondere kann durch die Ausnutzung der maximalen Aufnahmefähigkeit des Trocknungsmittels Energie eingespart werden, da die Anzahl der Regenerationszyklen für das Trocknungsmittel minimiert werden kann. Ferner kann verhindert werden, dass Umgebungsluft mit einer zu hohen Restfeuchte dem zweiten Prozessraum der Sorptionseinheit zugeführt wird, wodurch eine maximale Abtrennung von Kohlenstoffdioxid in dem der Trocknung nachfolgenden Prozessschritt sichergestellt werden kann.

In einer vorteilhaften Ausgestaltung des Verfahrens ist vorgesehen, dass eine Regeneration des Trocknungsmittels auf Basis einer ermittelten Restfeuchte der Luft stromabwärts der Trocknungseinheit, also nach der Trocknung des Trocknungsmittels, abgeschätzt wird. Durch eine Ermittlung der Restfeuchte der Umgebungsluft stromabwärts der Trocknungseinheit kann abgeschätzt werden, wie stark das Trocknungsmittel bereits regeneriert ist oder ob eine weitere Trocknung nicht mehr oder nur noch mit unverhältnismäßigem Energieeinsatz möglich ist. Dadurch kann der Trocknungsprozess möglichst energieeffizient ausgestaltet werden. Da eine Trocknung insbesondere durch einen Spülluftstrom erfolgt, wird in diesem Fall die Restfeuchte der Spülluft stromabwärts des Trocknungsmittels, also nach Durchströmen des Trocknungsmittels, ermittelt und eine Regeneration auf Basis der ermittelten Restfeuchte abgeschätzt.

Bevorzugt ist dabei, wenn zusätzlich eine Temperatur in der Trocknungseinheit oder stromabwärts der Trocknungseinheit, insbesondere eine Temperatur des Trocknungsmittels und/oder der Luft in der Trocknungseinheit oder stromabwärts der Trocknungseinheit erfasst wird. Da die relative Luftfeuchte stark von der Temperatur abhängig ist, führt die zusätzliche Ermittlung der Temperatur zu einer deutlichen Verbesserung des Ergebnisses der Prognose.

Besonders bevorzugt ist dabei, wenn aus einem Temperaturverlauf der Temperatur in der Trocknungseinheit oder stromabwärts des ersten Prozessraums auf die Restfeuchte des Trocknungsmittels geschlossen wird. Da die Temperatur mit abnehmender Beladung steigt, lässt sich über den charakteristischen Verlauf der Temperatur im oder hinter dem Trocknungsmaterial im ersten Prozessraum auf den Fortschritt der Entfeuchtung schließen.

In weiterer bevorzugter Ausgestaltung des Verfahrens ist vorgesehen, dass eine Sättigung des Sorbentmaterials bei der Adsorption von Kohlenstoffdioxid auf Basis einer Kohlenstoffdioxidkonzentration stromabwärts des zweiten Prozessraums abgeschätzt wird. Dabei wird der Beladungszustand des Sorbentmaterials angezeigt durch KohlenstoffdioxidKonzentration stromabwärts des zweiten Prozessraums. Dabei ist das Überschreiten eines Schwellenwertes für die Kohlenstoffdioxidkonzentration als Abbruchbedingung für den Adsorptionsprozess geeignet, da ab dem Überschreiten des Schwellenwertes davon ausgegangen werden kann, dass das Sorbentmaterial im Wesentlichen gesättigt ist.

Gemäß einer vorteilhaften Ausgestaltung des Verfahrens ist vorgesehen, dass eine Sättigung des Sorbentmaterials bei der Adsorption von Kohlenstoffdioxid auf Basis eines Gradienten der Kohlenstoffdioxidkonzentration stromabwärts des zweiten Prozessraums abgeschätzt wird. Aus dem Gradienten der Kohlenstoffdioxidkonzentration stromabwärts des zweiten Prozessraums lässt sich ebenfalls abschätzen, wie weit das Sorbentmaterial gesättigt ist.

In einer vorteilhaften Ausgestaltung des Verfahrens ist vorgesehen, dass während einer ersten Phase der Desorption eine Temperatur im Sorbentmaterial, ein Druck im zweiten Prozessraum und/oder eine Kohlenstoffdioxidkonzentration in dem zweiten Prozessraum oder in einem aus dem zweiten Prozessraum abgessaugten Gasstrom ermittelt wird. Alternativ oder ergänzend kann eine Temperatur im Sorbentmaterial erfasst werden. Da der Desorptionsprozess stark abhängig von den Parametern Druck und Temperatur ist, können diese Parameter zur Abschätzung des Sättigungsgrades des Sorptionsmaterials in dem zweiten Prozessraum genutzt werden. Insbesondere der Verlauf des Drucks während der Desorbtion gibt Aufschluss über die Gasfreisetzung aus dem Sorbenten. Die Abschätzung kann durch die Konzentration an Kohlenstoffdioxid durch das bereits während der Desorption freigesetzte Kohlenstoffdioxid nochmals verbessert werden. Alternativ kann direkt der Gasmassenstrom oder Gasvolumenstrom vor oder nach der Unterdruckpumpe gemessen werden.

Alternativ oder zusätzlich ist mit Vorteil vorgesehen, dass während einer zweiten Phase der Desorption eine relative Luftfeuchtigkeit und/oder ein Taupunkt in dem zweiten Prozessraum oder einem aus dem zweiten Prozessraum abgeführten Produktgasstrom ermittelt wird. Insbesondere bei Verwendung eines Physisorbenten ist die Aufnahmekapazität für Kohlenstoffdioxid stark abhängig von der Luftfeuchtigkeit, und da Physisorbenten eine höhere Affinität gegenüber Wasserdampf als gegenüber Kohlenstoffdioxid aufweisen, ist ein Trocknen des Sorbentmaterials vorteilhaft oder notwendig. Um einen solchen Trocknungsprozess optimal steuern zu können, ist die Kenntnis einer relativen oder absoluten Luftfeuchtigkeit und/oder des Taupunkts der den ersten Prozessraum verlassenden Luft hilfreich.

In einer vorteilhaften Ausgestaltung des Verfahrens ist vorgesehen, dass die Anpassung der Prozessparameter eine Anpassung der Prozesszeiten und/oder der Desorptionstemperatur in zumindest einem der Prozessräume umfasst. Dadurch kann in zumindest einem Teilprozess der Energiebedarf minimiert und der Prozess auf maximale Effizienz getrimmt werden.

Besonders bevorzugt ist dabei, wenn die Anpassung der Prozessparameter eine Anpassung der Prozesszeiten bei der Trocknung, bei der Adsorption und bei der Desorption umfasst. Dadurch kann über den gesamten Prozessverlauf das Verfahren optimiert werden, sodass ein maximal effizienter Prozess auf Basis der vorherrschenden Rahmenbedingungen erreicht wird.

Gemäß einer weiteren Verbesserung des Verfahrens ist mit Vorteil vorgesehen, dass die Anpassung der Prozessparameter eine Anpassung der Desorptionstemperatur und/oder der Trocknungstemperatur umfasst. Durch eine Anpassung der Temperaturen kann in Abhängigkeit der vorherrschenden Umgebungsparameter der Trocknungsprozess und/oder der Desorptionsprozess angepasst werden, um eine möglichst effiziente Prozessführung in den Prozessräumen der Anlage einzustellen.

Ferner ist alternativ oder zusätzlich mit Vorteil vorgesehen, dass die Anpassung der Prozessparameter eine Anpassung der Strömungsgeschwindigkeit eines Luftstroms durch die Anlage umfasst. Durch eine Anpassung der Strömungsgeschwindigkeit kann ein Luftstrom durch die Prozessräume der Anlage eingestellt werden, welcher zu einer bestmöglichen Trocknung der Umgebungsluft und/oder Abtrennung von Kohlenstoffdioxid aus der Umgebungsluft führt.

Ein weiterer Teilaspekt der Erfindung betrifft eine Anlage zur Abtrennung von Kohlenstoffdioxid aus der Umgebungsluft, umfassend:
- ein Förderelement zur Förderung eines Luftstroms der Umgebungsluft in einen ersten Prozessraum, wobei der Luftstrom in dem ersten Prozessraum getrocknet wird,
- eine Sorptionseinheit zum Adsorbieren von Kohlenstoffdioxid aus dem getrockneten Luftstrom mit einem Sorbentmaterial in einem zweiten Prozessraum, sowie zum anschließenden Desorbieren des in dem Sorbentmaterial adsorbierten Kohlenstoffdioxids, und
- eine Speichereinheit zum Einlagern des desorbierten Kohlenstoffdioxids, sowie
- eine Steuerungseinheit, welche dazu eingerichtet ist, ein in den vorhergehenden Abschnitten beschriebenes Verfahren auszuführen.

Eine solche Anlage ermöglicht es, die Effizienz eines Prozesses zur Abtrennung von Kohlenstoffdioxid aus der Umgebungsluft durch eine verbesserte Ausgestaltung der Teilprozesse "Trocknung", "Adsorption" und "Desorption" zu verbessern. Insbesondere ist es mit einer erfindungsgemäßen Anlage möglich, die Abbruchbedingungen der Teilprozesse so zu definieren, dass die Beladungskapazität des Trocknungsmittels beziehungsweise des Sorbentmaterials maximal ausgenutzt wird. Dadurch kann die Effizienz der Anlage gesteigert werden.

In einer vorteilhaften Ausgestaltung der Anlage ist vorgesehen, dass in der Trocknungseinheit oder stromabwärts der Trocknungseinheit und stromaufwärts der Sorptionseinheit ein Taupunktsensor, ein Luftfeuchtigkeitssensor, ein Temperatursensor, ein Volumenstromsensor und/oder ein Massenstromsensor angeordnet ist. Alternativ kann durch Erfassung des Differenzdrucks über dem Sorbenten auf den Volumenstrom/Massenstrom zurückgeschlossen werden. Durch die Erfassung von Prozessparametern wie der relativen oder absoluten Luftfeuchtigkeit, der Temperatur oder eines Volumen- oder Massenstroms durch den ersten Prozessraum kann der Trocknungsprozess optimiert werden.

In einer vorteilhaften Ausgestaltung der Anlage ist vorgesehen, dass stromabwärts des Trocknungsmittels ein Luftfeuchtigkeitssensor und ein Temperatursensor angeordnet sind.

Ferner ist in eine vorteilhaften Ausgestaltung des Anlage vorgesehen, dass in dem Trocknungsmittel oder stromabwärts des Trocknungsmittels ein Temperatursensor angeordnet ist.

Alternativ oder zusätzlich ist mit Vorteil vorgesehen, dass in der Sorptionseinheit ein Temperatursensor, ein Drucksensor, ein Luftfeuchtigkeitssensor, ein Sensor zur Erfassung der Kohlenstoffdioxidkonzentration, ein Sensor zur Erfassung der Strömungsgeschwindigkeit, ein Massenstromsensor und/oder ein Volumenstromsensor angeordnet ist. Durch die Erfassung einer Temperatur, eines Drucks, einer Luftfeuchtigkeit, einer Kohlenstoffdioxidkonzentration und/oder eine Strömungsgeschwindigkeit durch den zweiten Prozessraum kann die Adsorption beziehungsweise die Desorption optimiert werden.

Bevorzugt ist dabei, wenn stromaufwärts des Sorbentmaterials und stromabwärts des Sorbentmaterials jeweils ein Sensor zur Erfassung der Kohlenstoffdioxidkonzentration angeordnet ist.

Besonders bevorzugt ist dabei, wenn stromabwärts des Sorbentmaterials ein Sensor zur Erfassung der Kohlenstoffdioxidkonzentration, ein Temperatursensor, ein Sensor zur Erfassung der Luftfeuchtigkeit im Produktgasstrom sowie ein Volumenstromsensor oder Massenstromsensor angeordnet sind.

In einer vorteilhaften Ausgestaltung des Anlage ist zwischen der Sorptionseinheit zur Abtrennung von Kohlenstoffdioxid und der Speichereinheit zur Abtrennung von ein Umschaltventil angeordnet ist. Dabei ermöglicht das Umschaltventil in einer ersten Schaltstellung, insbesondere in einer Desorptionsphase, den Gasstrom in die Speichereinheit zu leiten und in einer zweiten Schaltstellung, einen Spülgasstrom in die Sorptionseinheit einzuleiten, um das in der Sorptionseinheit verbliebene Gas sowie die Restfeuchtigkeit aus dem Sorbentmaterial auszutreiben. Dieses Spülgas mit den aus dem Sorbentmaterial ausgetragenen Resten an Feuchtigkeit und/oder Kohlenstoffdioxid gelangt nicht in die Speichereinheit, sondern kann gesondert behandelt werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein bevorzugtes Ausführungsbeispiel einer erfindungsgemäßen Anlage zur Abtrennung von Kohlenstoffdioxid aus der Umgebungsluft, welche eine Trocknungseinheit, eine Sorptionseinheit und eine Speichereinheit aufweist;
- Figur 2: ein Ablaufdiagramm für ein erfindungsgemäßes Verfahren zur Abtrennung von Kohlenstoffdioxid aus der Umgebungsluft unter Berücksichtigung von Wetterparametern.
- Figur 3: einen zeitlichen Temperaturverlauf sowie der absoluten Feuchte bei der Trocknung des Trocknungsmittels,
- Figur 4: einen zeitlichen Verlauf von Temperatur und Druck in dem zweiten Prozessraum während der Desorption des Kohlenstoffdioxids, und

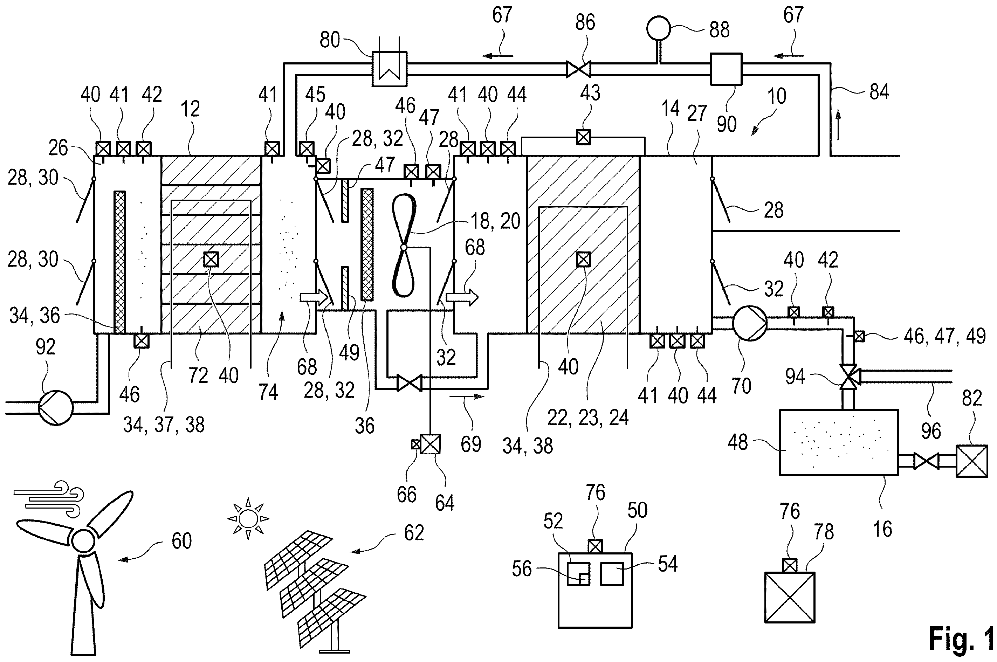

Figur 1 zeigt eine Anlage 10 zur Abtrennung von Kohlenstoffdioxid 48 aus der Umgebungsluft 74. Dabei wird der Anlage 10 Umgebungsluft, zugeführt und dieser Umgebungsluft 74 Kohlenstoffdioxid 48 und Wasser entzogen. Aus der Anlage 10 strömt ein Abluftstrom aus, welcher gegenüber der einströmenden Luft trockene, kohlenstoffdioxidreduzierte Luft aufweist. Die Anlage 10 umfasst eine Trocknungseinheit 12, in welcher dem Luftstrom 68 die in der Umgebungsluft enthaltene Luftfeuchte zumindest teilweise entzogen wird. Als Trocknungsmittel 72 für die Trocknungseinheit 12 kann beispielsweise ein hydrophiles Material wie Silica-Gel verwendet werden. Prinzipiell kann jedes Trocknungsmaterial verwendet werden, welches dazu geeignet ist, Feuchtigkeit aus der Luft aufzunehmen. Insbesondere kann in der Trocknungseinheit 12 auch ein Sorbentmaterial 22, insbesondere ein Physisorbent 23, als Trocknungsmittel 72 vorgesehen sein. Vorteilhaft ist, wenn das Sorbentmaterial 22 am Ende des Trocknungsprozesses kein Kohlenstoffdioxid 48 aufgenommen hat. Sofern zu Beginn oder während der Trocknung auch Kohlenstoffdioxid 48 aufgenommen wird, muss dieses während der weiteren Aufnahme von Wasserdampf vollständig wieder freigesetzt werden. Hierdurch wird gewährleistet, dass kein Kohlenstoffdioxid 48 unkontrolliert während der Regenerierung der Trockenstufe verloren geht. Bevorzugt wird ein Trocknungsmittel verwendet, welches durch eine entsprechende Prozessführung nach der Aufnahme der Luftfeuchte wieder regeneriert und erneut dem Prozess zugeführt werden kann. Dabei wird ein Trocknungsgrad der Umgebungsluft 74 angestrebt, bei welchem die Restfeuchte der Umgebungsluft einen Taupunkt von maximal -30°C, vorzugsweise maximal -50°C, besonders bevorzugt maximal -60°C beträgt.

Die Anlage 10 umfasst ferner eine Sorptionseinheit 14, in welcher das Kohlenstoffdioxid 48 aus der Umgebungsluft 74 gebunden wird. Dabei wird das sich in der getrockneten Umgebungsluft 74 befindliche Kohlenstoffdioxid 48 in einem Sorbentmaterial 22, insbesondere in einem Physisorbenten 23, besonders bevorzugt in einem Zeolithmaterial 24 eingespeichert.

Darüber hinaus weist die Anlage 10 eine Speichereinheit 16 auf, in welcher das in der Sorptionseinheit 14 aus der Umgebungsluft abgetrennte Kohlenstoffdioxid 48 in konzentrierter Form eingespeichert wird. Alternativ kann das Kohlenstoffdioxid 48 auch direkt einer weiteren Verwendung zugeführt werden. Der Produktgaszweig weist ferner ein Umschaltventil 94 auf, über das der abgesaugte Produktgasstrom entweder in den Speicher, oder in einen zweiten Zweig 96 geleitet wird. In einer ersten Phase der Desorption wird reines Kohlenstoffdioxid 48 gewonnen und entweder direkt gespeichert, oder einem weiteren Prozess zugeführt. In einer zweiten Phase wird unter Zuhilfenahme einer Spülluft die verbliebene Feuchte ausgetrieben. Dieser Teil des Gasstroms soll aufgrund der Verdünnung durch die Spülluft nicht in die Speichereinheit 16 gelangen. Die Anlage 10 umfasst ferner ein Förderelement 18, insbesondere ein Gebläse 20, mit welchem ein Luftstrom an die Umgebungsluft durch die Trocknungseinheit 12 und anschließend durch die Sorptionseinheit 14 geführt wird.

Die Trocknung der Umgebungsluft 74 erfolgt vorzugsweise in einem ersten Prozessraum 26, welcher durch Verschlusselemente 28, insbesondere durch Klappen 30, 32 im Wesentlichen gasdicht von der Umgebung abgetrennt werden kann. Dabei weist der erste Prozessraum 26 in dem dargestellten Ausführungsbeispiel zwei Einlassklappen 30 und zwei Auslassklappen 32 auf. In dem ersten Prozessraum 26 können ein Heizelement 34 und/oder ein Kühlelement 36 angeordnet sein, um die Lufttemperatur in der Trocknungseinheit 12 beziehungsweise im ersten Prozessraum 26 zu manipulieren. In dem ersten Prozessraum 26 beziehungsweise in der Trocknungseinheit 12 sind jeweils vor und nach dem Trockenmittel 72 ein Temperatursensor 40, ein Drucksensor 41, ein Luftfeuchtigkeitssensor 42 angeordnet. Einer der beiden Drucksensoren 41 kann durch einen Differenzdrucksensor 43 ersetzt werden. Dieser kann aufgrund seiner höheren Genauigkeit Veränderungen am Trocknungsmittel 72 dazu genutzt werden, eine Veränderung des Drosselverhaltens beim Durchströmen des Trocknungsmittels 72 zu erkennen. Beispielsweise kann eine lokale Änderungen der Schütthöhe hervorgerufen durch Strömungseffekte, erkannt werden. Der Luftfeuchtigkeitssensor 42 stromab des Trocknungsmittels 72 ist bevorzugt ein Taupunktsensor 45 zur Erfassung sehr geringer Restfeuchten. Die Anordnung jeweils vor und nach dem Trocknungsmittel 72 dient der Überwachung des Beladungszustands des Trocknungsmittels 72 sowohl in der Trockenphase, also auch in der Regenerationsphase. Insbesondere anhand der Feuchte-Messsignale lässt sich das Trocknungssystem kontrollieren. Dabei kann in der Trocknungsphase eine nachlassende Trocknungsleistung aus dem Anstieg des Taupunktes über einen Schwellwert (z.B. -40°C) ermittelt werden. Während der Regeneration gibt der stromauf des Trocknungsmittels 72 liegende Luftfeuchtigkeitssensor 42 zusammen mit der Temperatur entscheidende Hinweise auf den Fortschritt der Regeneration.

Weiterhin ist an einer Stelle in der Anlage 10 ein Sensor 46 zur Erfassung der Strömungsgeschwindigkeit 46, ein Massenstromsensor 47 und/oder ein Volumenstromsensor 49 angeordnet. Bevorzugt wird eine Stelle mit höherer Geschwindigkeit gewählt, beispielsweise der Verbindungskanal zwischen der Trocknungseinheit 12 und der Sorptionseinheit 14. Auch ein Kanal der die Luft zu der Anlage 10 oder von der Anlage 10 weg führt, ist geeignet, um dort die Strömungsgeschwindigkeit, den Massenstrom und/oder den Volumenstrom zu erfassen.

Die Adsorption und anschließende Desorption von Kohlenstoffdioxid erfolgt vorzugsweise in einem zweiten Prozessraum 27, welcher durch Verschlusselemente 28, insbesondere durch Klappen 30, 32 im Wesentlichen gasdicht von der Umgebung abgetrennt werden kann. Ferner weist der zweite Prozessraum 27 ein Heizelement 34, insbesondere einen Wärmetauscher 38 auf, um die Temperatur insbesondere beim Desorptionsprozess entsprechend anheben zu können und das im Sorptionsmaterial 22 adsorbierte Kohlenstoffdioxid 48 wieder freizusetzen. An dem zweiten Prozessraum 27, beziehungsweise an der Sorptionseinheit 14, kann eine Unterdruckpumpe 70 vorgesehen sein, um den Luftdruck in dem zweiten Prozessraum 27 zu manipulieren und insbesondere während eines Desorptionsprozesses abzusenken. Der zweite Prozessraum 27 ist fluidisch mit der Speichereinheit 16 verbunden, in welcher das aus der Umgebungsluft abgetrennte Kohlenstoffdioxid 48 eingelagert werden kann. In dem zweiten Prozessraum 27, beziehungsweise in der Adsorptionseinheit 14, sind jeweils stromauf und stromab des Sorbentmaterials 22 ein Temperatursensor 40, ein Drucksensor 41 ein Luftfeuchtigkeitssensor 42, und ein Sensor zur Erfassung der Kohlenstoffdioxidkonzentration angeordnet. Einer der Drucksensoren 41 kann wie in der Trocknungseinheit 12 durch einen Differenzdrucksensor 43 ersetzt werden.

Zwischen der Trocknungseinheit 12 und der Sorptionseinheit 14 ist ein Förderelement 18, insbesondere ein Gebläse 20 vorgesehen, um einen Luftstrom 68 der Umgebungsluft zunächst durch die Trocknungseinheit 12 und anschließend durch die Sorptionseinheit 14 zu fördern. Das Förderelement 18 weist eine Antriebseinheit 64 auf, deren Leistung über eine Leistungsregelung 66 entsprechend angepasst werden kann. Alternativ kann das Förderelement 18 auch in einem Kanal zur Zuführung der Luft zu der Anlage 10 oder einem Kanal zur Abführung der Luft aus der Anlage 10 angeordnet sein.

Die Anlage 10 wird vorzugsweise aus erneuerbaren Energien wie Windkraft, Solarenergie oder Geothermie mit Strom versorgt, um beim Betrieb keine zusätzlichen Kohlenstoffdioxidemissionen zu erzeugen. Dazu ist eine Windkraftanlage 60 und/oder eine Solaranlage 62, insbesondere eine Photovoltaikanlage, vorgesehen, um die Anlage 10 mit erneuerbarer Energie zu versorgen.

Die Anlage 10 weist ferner eine Steuerungseinheit 50 mit einer Speichereinheit 52 und einer Recheneinheit 54 auf, wobei in der Speichereinheit 52 ein Computerprogrammcode 56 abgelegt ist, welcher dazu eingerichtet ist, bei Ausführung durch die Recheneinheit 54 der Steuerungseinheit 50 den Betrieb der Anlage 10 zur Abtrennung von Kohlenstoffdioxid 48 aus der Umgebungsluft zu steuern. Die Steuerungseinheit 50 kann über eine Datenverbindung 76 mit einem Datenzentrum 78 in Verbindung stehen, welches der Anlage 10 Daten zur Steuerung der Anlage 10 zur Verfügung stellt oder mit dieser austauscht.

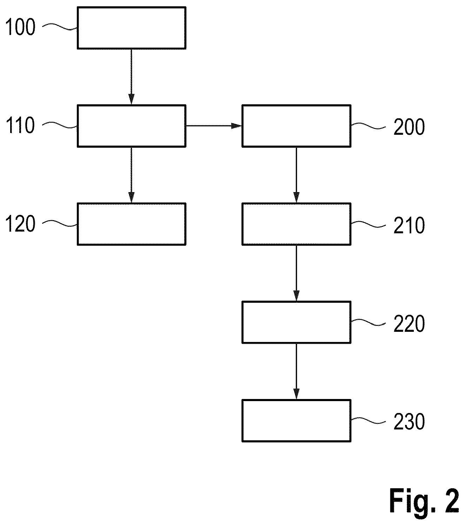

In Figur 2 ist ein Ablaufdiagramm zur Durchführung eines erfindungsgemäßen Verfahrens zur Steuerung einer Anlage 10 zur Abtrennung von Kohlenstoffdioxid 48 aus der Umgebungsluft 74 dargestellt. Dabei wird in einem ersten Verfahrensschritt <100> ein Luftstrom 68 der Umgebungsluft 74 in einen ersten Prozessraum 26 der Anlage 10 gefördert, wobei der Luftstrom 68 in dem ersten Prozessraum 26 durch das Trocknungsmittel 72 getrocknet wird. Dabei werden während des Trocknungsprozesses Messgrößen erfasst, über welche ein Rückschluss auf die Restfeuchte der Umgebungsluft 74 möglich ist. Eine solche Messgröße ist der Taupunkt, welcher auslassseitig am ersten Prozessraum 26 oder zwischen dem ersten Prozessraum 26 und der Sorptionseinheit 14 ermittelt werden kann. Alternativ kann zur Bestimmung der Trockenleistung auch die relative Luftfeuchtigkeit durch einen Luftfeuchtigkeitssensor 42 erfasst werden, sofern der Luftfeuchtigkeitssensor 42 eine entsprechende Genauigkeit im Bereich sehr niedriger Feuchten aufweist. Aus dieser kann zusammen mit dem Druck und der Temperatur die absolute Feuchtigkeit berechnet werden. Eine weitere wichtige Messgröße im Verfahrensschritt <100> ist der Luftmassenstrom oder Luftvolumenstrom durch die Anlage 10. Dieser Messwert kann in Abhängigkeit des aktuellen Trocknungsvermögens (Taupunkt) des Trocknungsmittels 72 zur Variation des Luftmengenstroms in nachfolgenden Zyklen verwendet werden.

In einem anschließenden Verfahrensschritt <110> wird die im ersten Prozessraum 26 getrocknete Umgebungsluft 74 in einen zweiten Prozessraum 27 weitergeleitet. Dabei werden als Messgrößen insbesondere ein Volumenstrom oder ein Massenstrom der Umgebungsluft 74, eine Temperatur der Umgebungsluft und/oder eine relative Luftfeuchtigkeit bzw. der Taupunkt ermittelt.

In einem Verfahrensschritt <120> wird das Trocknungsmittel 72 wieder regeneriert und die im Trocknungsmittel 72 gebundene Feuchtigkeit wieder ausgetrieben. Zur Überwachung der Regeneration des Trocknungsmittels 72 eignet sich insbesondere die Erfassung einer relativen Luftfeuchtigkeit im ersten Prozessraum 26 stromab des Trocknungsmittels 72 in Bezug auf einen ersten Spülluftstrom 67. Über die Temperatur und den Druck an gleicher Stelle lässt sich die absolute Feuchtigkeit berechnen, und diese als Kriterium für die Regeneration des Trocknungsmittels 72 verwenden.

In einem Verfahrensschritt <200> erfolgt anschließend eine Adsorption von Kohlenstoffdioxid 48 aus dem getrockneten Luftstrom 68 mit einem Physisorbenten 23 in einem zweiten Prozessraum 27. Bei der Adsorption von Kohlenstoffdioxid 48 wird insbesondere eine Kohlenstoffdioxidkonzentration stromabwärts des zweiten Prozessraums 27 erfasst und in Relation zur Kohlenstoffdioxidkonzentration stromauf des zweiten Prozessraums 27 bewertet . Alternativ zur Erfassung eines Verlaufs einer absoluten Kohlenstoffdioxidkonzentration kann auch ein Gradient der Kohlenstoffdioxidkonzentration erfasst fernen. Alternativ oder zusätzlich ist es möglich, den Beladungsgrad des Sorbentmaterials 22 anhand von einem Beladungsmodell zu ermitteln, bei welchen mehrere prozessrelevante Eingangsgrößen wie der Massen- oder Volumenstrom, die Temperatur, die Prozesszeit und/oder die Strömungsgeschwindigkeit berücksichtigt werden.

In einem Verfahrensschritt <210> erfolgt eine erste Desorptionsphase des im Sorbentmaterial 22 aufgenommenen Kohlenstoffdioxids. Zur Bewertung des Desorptionsprozesses wird insbesondere eine Kohlenstoffdioxidkonzentration im zweiten Prozessraum 27 oder einem aus dem zweiten Prozessraum 27 einer Speichereinheit 16 zugeführten Produktgasstroms 58, ein Massenstrom des Produktgasstromes 58 oder ein Volumenstrom des Produktgasstroms 58 und/oder ein Druck und eine Temperatur im zweiten Prozessraum 27 erfasst.

An die erste Desorptionsphase <210> schließt sich eine zweite Desorptionsphase <220> an, in welcher die Restfeuchte aus dem Sorbentmaterial 22 in dem zweiten Prozessraum 27 entfernt wird. Diese Phase wird mittels der Unterdruckpumpe 70 und einem zweiten Spülluftstrom 69 betrieben. Zur Bewertung der Entfeuchtung des Sorbentmaterials 22, insbesondere eines Physisorbenten 23, vorzugsweise eines Zeolithmaterials 24, werden die relative Feuchte, alternativ der Taupunkt, im zweiten Prozessraum 27, oder stromab der Unterdruckpumpe 70 gemessen. Dieses Gas aus der zweiten Phase wird mittels eines Umschaltventil 94 nicht in die Speichereinheit 52 geleitet, sondern anderweitig abgeführt. Alternativ oder zusätzlich ist es möglich, die Restfeuchte des Sorbentmaterials 22 anhand von einem Beladungsmodell zu ermitteln, bei welchen mehrere prozessrelevante Eingangsgrößen wie der Massen- oder Volumenstrom, die Temperatur, die Prozesszeit und/oder die Strömungsgeschwindigkeit berücksichtigt werden.

Auf Basis der in den Verfahrensschritten ermittelten Daten werden die Prozessparameter, insbesondere eine Dauer einer Trocknung, Adsorption oder Desorption, die Desorptionstemperatur des Sorbentmaterials 22 und/oder die Trocknungstemperatur des Trocknungsmittels 72 sowie der Luftmassenstrom durch die Einheiten 12, 14 der Anlage 10 angepasst.

In einem Verfahrensschritt <230> wird das desorbierte Kohlenstoffdioxid 48 aus dem Produktgasstrom 58 in einer Speichereinheit 16 eingelagert, oder einer direkten Verwendung in nachfolgenden Prozessen zugeführt

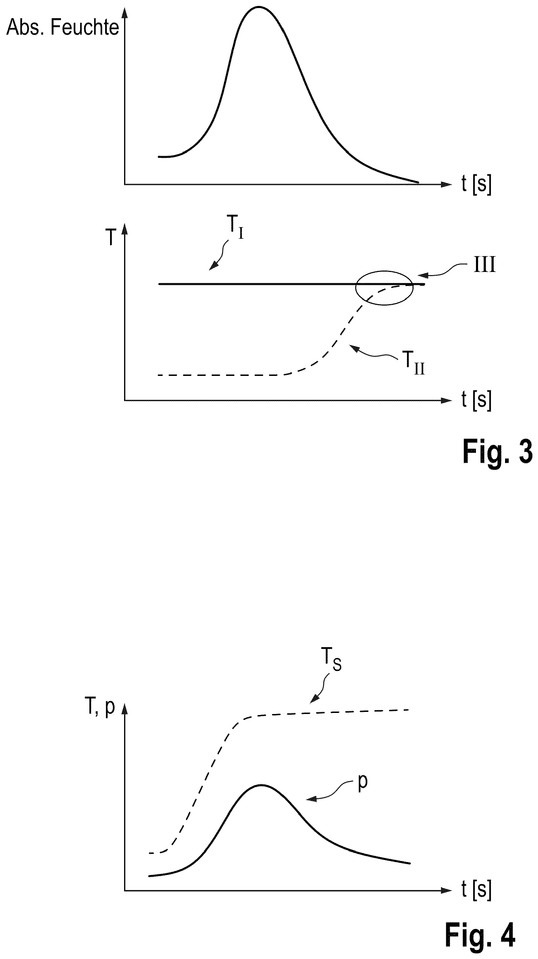

In Figur 3 ist ein zeitlicher Verlauf der absoluten Feuchte sowie ein Temperaturverlauf bei der Trocknung des Trocknungsmittels 72 dargestellt. Dabei ist wird eine Temperatur T_{I} des ersten Spülluftstroms 67 am Eingang in die Trocknungseinheit 12 und eine zweite Temperatur T_{II} am Ausgang der Trocknungseinheit 12 erfasst. Solange die Trocknung läuft, ist die Temperatur am Ausgang niedriger als am Eingang, da die Verdampfung des Wassers aus dem Trocknungsmittel 72 Energie benötigt. Zu einem Zeitpunkt III nähern sich die Temperaturen an, sodass davon ausgegangen werden kann, dass zu diesem Zeitpunkt III eine nahezu vollständige Trocknung des Trocknungsmittels 72 erreicht ist.

In Figur 4 sind ein Temperaturverlauf im Sorbentmaterial 22 und ein Druckverlauf in der Sorptionseinheit 14 bei der Desorption des im Sorbentmaterials 22 eingelagerten Kohlenstoffdioxids 48 dargestellt. Dabei steigt der Druck ausgehend von einem starken Unterdruck zunächst mit zunehmender Temperatur an, was ein Austreten von Kohlenstoffdioxid 48 aus dem Sorbentmaterial 22 anzeigt. Wenn der größte Gradient des austretenden Kohlenstoffdioxid 48 erreicht ist, fällt der Druck wieder auf das Niveau ab, das die Unterdruckpumpe 70 erreichen kann. Dies zeigt den Moment an, an dem bei dieser Sorbenttemperatur kein weiteres Kohlenstoffdioxid 48 mehr aus dem Sorbentenmaterial 22 desorbiert werden kann.

### Bezugszeichenliste

- 10: Anlage zur Abtrennung von Kohlenstoffdioxid
- 12: Trocknungseinheit
- 14: Sorptionseinheit
- 16: Speichereinheit
- 18: Förderelement

- 20: Gebläse
- 22: Sorbentmaterial
- 23: Physisorbent
- 24: Zeolith
- 26: erster Prozessraum
- 27: zweiter Prozessraum
- 28: Verschlusselement

- 30: Einlassklappe
- 32: Auslassklappe
- 34: Heizelement
- 36: Kühlelement
- 37: kombiniertes Heiz- und Kühlelement
- 38: Wärmetauscher

- 40: Temperatursensor
- 41: Drucksensor
- 42: Luftfeuchtigkeitssensor
- 43: Differenzdrucksensor
- 44: Sensor zur Erfassung der Kohlenstoffdioxidkonzentration
- 45: Taupunktsensor
- 46: Sensor zur Erfassung der Strömungsgeschwindigkeit
- 47: Massenstromsensor
- 48: Kohlenstoffdioxid
- 49: Volumenstromsensor

- 50: Steuerungseinrichtung
- 52: Speichereinheit
- 54: Recheneinheit
- 56: Computerprogrammcode
- 58: Produktgasstrom

- 60: Windkraftanlage
- 62: Solaranlage
- 64: Antriebseinheit
- 66: Leistungsregelung
- 67: erster Spülluftstrom
- 68: Luftstrom
- 69: zweiter Spülluftstrom

- 70: Unterdruckpumpe
- 72: Trocknungsmittel
- 74: Umgebungsluft / Luft
- 76: Datenverbindung
- 78: Datenquelle

- 80: Spülluftheizung
- 82: Nachfolgeprozess
- 84: Rückführungsleitung
- 86: Rückführventil
- 88: Speicher

- 90: Rückschlagventil
- 92: Spülluftabsaugpumpe
- 94: Umschaltventil
- 96: Abführleitung

- 100: Verfahrensschritt - Fördern eines Luftstroms
- 110: Verfahrensschritt - Weiterleiten getrockneter Umgebungsluft
- 120: Verfahrensschritt - Regenerieren des Trocknungsmittels
- 200: Verfahrensschrift - Adsorbieren von Kohlenstoffdioxid
- 210: Verfahrensschritt - erste Desorptionsphase
- 220: Verfahrensschritt - zweite Desorptionsphase
- 230: Verfahrensschritt - Einlagern des desorbierten Kohlenstoffdioxids

## Patentansprüche

1. Verfahren zur Steuerung einer Anlage (10) zur Abtrennung von Kohlenstoffdioxid (48) aus der Umgebungsluft (74), umfassend folgende Schritte:
- Fördern (100) eines Luftstroms (68) der Umgebungsluft (74) in einen ersten Prozessraum (26), wobei der Luftstrom (68) in dem ersten Prozessraum (26) getrocknet wird,
- Weiterleiten (110) der getrockneten Umgebungsluft (74) aus dem ersten Prozessraum (26) in einen zweiten Prozessraum (27),
- Adsorbieren (200) von Kohlenstoffdioxid (48) aus dem getrockneten Luftstrom (68) mit einem Sorbentmaterial (22) in dem zweiten Prozessraum (27),
- Desorbieren (210, 220) des in dem Sorbentmaterial (22) adsorbierten Kohlenstoffdioxids (48), und
- Einlagern (230) des desorbierten Kohlenstoffdioxids (48) in einer Speichereinheit (16) oder Überführen des desorbierten Kohlenstoffdioxids (48)in einen nachfolgenden Prozess, wobei
- eine Anpassung der Prozessparameter der Anlage (10) für die Trocknung, die Adsorption und/oder die Desorption auf Basis eines Beladungsgrads des Trocknungsmittel (72) und/oder des Sorbentmaterials (22) erfolgt.

2. Verfahren nach Anspruch 1, wobei eine Wasseraufnahme des Trocknungsmittels (72) auf Basis einer ermittelten Restfeuchte der Luft (74) stromabwärts der Trocknungseinheit (12) abgeschätzt wird.

3. Verfahren nach Anspruch 1 oder 2, wobei eine Regeneration des Trocknungsmittels (72) auf Basis einer ermittelten Feuchte der Luft (74) stromabwärts der Trocknungseinheit (12) abgeschätzt wird.

4. Verfahren nach Anspruch 3, wobei zusätzlich eine Temperatur in dem Trocknungsmittel (72) und/oder der Luft (74) in der Trocknungseinheit (12) oder stromabwärts der Trocknungseinheit (12) erfasst wird.

5. Verfahren nach Anspruch 4, wobei aus einem Temperaturverlauf der Temperatur in dem Trocknungsmittel (72) und/oder in der Luft (74) in der Trocknungseinheit (12) oder stromabwärts des ersten Prozessraums (26) auf die Restfeuchte des Trocknungsmittels (72) während der Regeneration geschlossen wird.

6. Verfahren nach einem der Ansprüche 1 bis 5, wobei eine Sättigung des Sorbentmaterials (22) bei der Adsorption von Kohlenstoffdioxid (48) auf Basis einer Kohlenstoffdioxidkonzentration stromabwärts des zweiten Prozessraums (27) abgeschätzt wird.

7. Verfahren nach einem der Ansprüche 1 bis 6, wobei eine Sättigung des Sorbentmaterials (22) bei der Adsorption von Kohlenstoffdioxid auf Basis eines Gradienten der Kohlenstoffdioxidkonzentration stromabwärts des zweiten Prozessraums (27) abgeschätzt wird.

8. Verfahren nach einem der Ansprüche 1 bis 7, wobei während einer ersten Phase der Desorption eine Temperatur im Sorbentmaterial (22), ein Druck im zweiten Prozessraum (27) und/oder eine Kohlenstoffdioxidkonzentration in dem zweiten Prozessraum (27) oder in einem aus dem zweiten Prozessraum (27) abgesaugten Gasstrom (58) ermittelt wird.

9. Verfahren nach einem der Ansprüche 1 bis 8, wobei während einer zweiten Phase der Desorption eine relative Luftfeuchtigkeit und/oder ein Taupunkt in dem zweiten Prozessraum (27) oder einem aus dem zweiten Prozessraum (27) abgeführten Produktgasstrom (58) ermittelt wird.

10. Verfahren nach einem der Ansprüche 1 bis 9, wobei die Anpassung der Prozessparameter eine Anpassung der Prozesszeiten in zumindest einem der Prozessräume (26, 27) umfasst.

11. Verfahren nach einem der Ansprüche 1 bis 10, wobei die Anpassung der Prozessparameter eine Anpassung der Desorptionstemperatur und/oder der Trocknungstemperatur umfasst.

12. Verfahren nach einem der Ansprüche 1 bis 11, wobei die Anpassung der Prozessparameter eine Anpassung der Strömungsgeschwindigkeit eines Luftstroms (68) durch die Anlage (10) umfasst.

13. Anlage (10) zur Abtrennung von Kohlenstoffdioxid aus der Umgebungsluft (74), umfassend:
- ein Förderelement zur Förderung eines Luftstroms (68) der Umgebungsluft (74) in einen ersten Prozessraum (26), wobei der Luftstrom (68) in dem ersten Prozessraum (26) getrocknet wird,
- eine Sorptionseinheit (14) zur Adsorbieren von Kohlenstoffdioxid (48) aus dem getrockneten Luftstrom (68) mit einem Sorbentmaterial (22) in einem zweiten Prozessraum (27), sowie zur anschließenden Desorbieren des in dem Sorbentmaterial (22) adsorbierten Kohlenstoffdioxids (48), und
- eine Speichereinheit (16) zum Einlagern des desorbierten Kohlenstoffdioxids (48), sowie
- mit einer Steuerungseinheit (50), wobei die Steuerungseinheit (50) dazu eingerichtet ist, ein Verfahren nach einem der Ansprüche 1 bis 12 auszuführen.

14. Anlage (10) nach Anspruch 13, wobei in der Trocknungseinheit (12) oder stromabwärts der Trocknungseinheit (12) und stromaufwärts der Sorptionseinheit (14) ein Taupunktsensor (42b), ein Luftfeuchtigkeitssensor (42) und/oder ein Temperatursensor (40) angeordnet ist.

15. Anlage (10) nach Anspruch 13 oder 14, wobei in der Sorptionseinheit (14) ein Temperatursensor (40), ein Drucksensor (41), ein Luftfeuchtigkeitssensor (42), ein Sensor zur Erfassung der Kohlenstoffdioxidkonzentration (44), ein Sensor zur Erfassung der Strömungsgeschwindigkeit (46), ein Massenstromsensor (47) und/oder ein Volumenstromsensor (49) angeordnet ist.
